# EUROPÄISCHE PATENTSCHRIFT

(11) **EP 1 695 797 B1**
(45) Veröffentlichungstag und Bekanntmachung des Hinweises auf die Patenterteilung: **28.09.2011**
(21) Anmeldenummer: 06101004.7
(22) Anmeldetag: 30.01.2006
(51) Int. Cl.: B25D 17/00, B23B 31/16

(54) **Werkzeugaufnahme**
Tool holder
Porte-outil

(30) Priorität: 25.02.2005 DE 102005000015
(43) Veröffentlichungstag der Anmeldung: 30.08.2006
(73) Patentinhaber: HILTI Aktiengesellschaft, 9494 Schaan (LI)
(72) Erfinder: Kleine, Werner, 28832, Achim (DE); Britten, Werner, 66125, Saarbrücken (DE)
(74) Vertreter: Wildi, Roland

(56) Entgegenhaltungen:
- DE-A1- 3 328 886
- DE-A1- 3 409 494
- DE-A1- 4 328 358

## Beschreibung

Die Erfindung bezeichnet eine Werkzeugaufnahme gemäß dem Oberbegriff des Anspruchs 1 mit einem radial versetzbaren Verriegelungskörper, insbesondere für einen Kombihammer zur Aufnahme eines Schlagbohrers oder eines Drehbohrers.

Schlagend und drehend angetriebene Werkzeuge mit einem Einsteckende werden üblicherweise formschlüssig drehfest sowie begrenzt axial beweglich in einer Werkzeugaufnahme geführt, welche mittels zumindest eines, in eine maschinenseitig geschlossene Nut des Einsteckendes eindringenden, radial versetzbaren Verriegelungskörpers axial verriegelt werden.

Nach der DE19724532 sowie der DE3205063 weist eine Werkzeugaufnahme einen, von einer hohlzylinderförmigen Aufnahmehülse eines Führungsdurchmessers radial nach Innen mit einer Steghöhe einkragenden, leistenförmigen Drehmitnahmesteg und einen radial versetzbaren Verriegelungskörper auf.

Die derzeit bei Bohrhammersystemen weltweit meistgenutzten, praktisch standardisierten Einsteckenden und zugeordneten Werkzeugaufnahmen sind in der US4107949 beschrieben, welche eine aufnahmeseitige, zylindermantelförmige Führungsfläche mit dem Führungsdurchmesser von 10 mm, zum freien Stirnende hin axial geschlossene Verriegelungsnuten und zum freien Stirnende hin axial offene, trapezförmige Drehmitnahmenuten aufweisen. In der zugeordneten Werkzeugaufnahme greift zumindest ein radial versetzbarer Verriegelungskörper in eine Verriegelungsnut ein und begrenzt die axiale Beweglichkeit des Werkzeugs in der Aufnahmehülse der Werkzeugaufnahme. Zudem greifen zwei gegenüberliegende Drehmitnahmestege in je eine Drehmitnahmenut des Einsteckendes ein und übertragen über je eine Tangentialkontaktfläche das Drehmoment. In derartigen Werkzeugaufnahmen über zugeordnete modifizierte Einsteckenden aufgenommene Drehbohrer wie Holz- oder Metallbohrer, welche nicht axial begrenzt beweglich einzuspannen sind, können allein über die verschleissbehaftete Aufnahmehülse mit den Drehmitnahmestegen nicht mit der nötigen Rundlaufpräzision geführt werden.

Nach der DE4328358 weist eine passend für ein obiges Einsteckende ausgebildete kombinierte Werkzeugaufnahme nach dem Oberbegriff des Anspruchs 1 mit festen Drehmitnahmestegen und radial versetzbaren Verriegelungskörpern, drei durch Drehung der stirnverzahnten Spannhülse axial sowie radial versetzbare Spannelemente auf, die als innenkonusförmige Spannbacken ausgebildet und den Verriegelungskörpern und Drehmitnahmestegen werkzeugseitig vorgelagert sind. Die beim Drehbohren radial nach Innen auf einen zylinderförmigen Rundschaftabschnitt des Einsteckendes druckverspannte Spannbacken klemmen das Drehbohrwerkzeug haftreibkraftschlüssig in der Werkzeugaufnahme fest, wobei sowohl das notwendige Drehmoment als auch die axiale Vorschubkraft über die Spannbacken eingeprägt werden, deren Spannflächen mit einer Spannlänge von etwa dem Doppelten des Führungsdurchmessers entsprechend grossflächig dimensioniert sind. Durch die axial versetzbaren grossflächigen Spannbacken ist die axiale Baulänge sehr lang. Das Verspannen des Drehbohrers mit der stirnverzahnten Spannhülse erfordert einen Spannfutterschlüssel als Hilfsmittel.

Nach der DE3409494 sind drei mit einer stirnverzahnten Spannhülse mitdrehend geführte Spannbacken über eine stirnseitige Spiralverzahnung an der Werkzeugaufnahme radial versetzbar. Die Aufnahmehülse der Werkzeugaufnahme weist keine festen Drehmitnahmestege auf. Die Spannbacken mit einer dem Führungsdurchmesser entsprechenden Spannlänge bringen beim Drehbohen sowohl das notwendige Drehmoment als auch die axiale Vorschubkraft haftreibkraftschlüssig auf, wohingegen sie beim Schlagbohren nur locker in drei zugeordnete Verriegelungsnuten verriegelnd eingreifen und das Drehmoment über ihre Tangentialkontaktflächen aufbringen. Das Verspannen des Drehbohrers mit der stirnverzahnten Spannhülse erfordert einen Spannfutterschlüssel als Hilfsmittel. Zudem ist eine derartige Werkzeugaufnahme für die obigen weltweit meistgenutzten Einsteckenden inkompatibel.

Zudem sind nach den DE3515555, US4469201 die Spannelemente als radial innere Hohlzylindermantelsegmente ausgebildet.

Die Aufgabe der Erfindung besteht in der Realisierung einer für Schlagbohren und Drehbohren geeigneten Werkzeugaufnahme kurzer axialer Baulänge, die hilfsmittelfrei eine präzise rundlaufende Verspannung eines Drehbohrers gestattet.

Die Aufgabe wird im Wesentlichen durch die Merkmale des Anspruchs 1 gelöst. Vorteilhafte Weiterbildungen ergeben sich aus den Unteransprüchen.

So weist eine Werkzeugaufnahme mit mindestens zwei gegenüberliegenden, von einer hohlzylinderförmigen Aufnahmehülse eines Führungsdurchmessers radial nach Innen einkragenden, festen leistenförmigen Drehmitnahmestegen mit Kontaktflächen zumindest einen radial versetzbaren Verriegelungskörper auf, wobei in der Aufnahmehülse in einem aufnahmeseitigen Führungsbereich des Führungsdurchmessers beabstandet zu den Drehmitnahmestegen zumindest zwei, über eine handhabbar drehversetzbare Spannhülse radial ohne axialen Anteil nach Innen versetzbare, Führungselemente angeordnet sind.

Da beim Drehbohren das notwendige Drehmoment und die Vorschubkraft von den festen leistenförmigen Drehmitnahmestegen aufgenommen und das Werkzeug gegen Herausfallen von den Verriegelungskörpern verriegelt wird, dienen die Führungselemente nur zur exakten koaxialen Ausrichtung eines zweckentsprechend zugeordneten Einsteckendes eines Drehbohrwerkzeugs in den um ein Spaltmass radial weiteren Führungsbereich der verschleissbehafteten Aufnahmehülse. Somit ist keine grossflächige Spannfläche für eine haftreibungskraftschlüssige Verspannung notwendig sondern bereits eine kleine Führungsfläche mit kurzer axialer Führungslänge für einen formschlüssigen Zwang hinreichend. Durch diese Führungselemente mit kurzer axialer Führungslänge kann eine Werkzeugaufnahme kurzer Baulänge realisiert werden.

Vorteilhaft sind die Führungselemente tangential versetzt zwischen den Drehmitnahmestegen angeordnet, wodurch die notwendige Baulänge der Werkzeugaufnahme verkürzt wird.

Vorteilhaft beträgt die axiale Führungslänge der Führungselemente zwischen einem halben und einem ganzen Führungsdurchmesser, wodurch die Führungselemente in den für obige weltweit meistgenutzte Einsteckenden üblichen aufnahmeseitigen Führungsbereich der Aufnahmehülse integriert werden können.

Vorteilhaft beträgt die maximal mögliche Drehung der Spannhülse 120°, wodurch eine ergonomische Schnellspannwerkzeugaufnahme realisiert ist. Da die radiale Versetzung der Führungselemente nur das Spaltmass kleiner 0,1 mm überbrücken und keine Druckverspannung erzwingen muss, ist die Drehung der Spannhülse ohne weitere Hilfsmittel manuell möglich.

Vorteilhaft sind in einer Drehposition der Spannhülse die Führungselemente zumindest 0.1 mm radial ausserhalb des Führungsdurchmessers, wodurch beim Schlagbohren in der Aufnahmehülse hin- und herbewegte Schlagwerkzeuge die Führungselemente nicht verschleissen.

Vorteilhaft ist in der Spannhülse zumindest eine Kulissenführung ausgeformt, an welcher bei deren Drehung die radial versetzbaren Führungselemente formschlüssig entlang gleiten, wodurch eine beliebige stetige, von der Drehung abhängige, Versetzungsfunktion einfach realisierbar ist.

Vorteilhaft ist neben der aus den zumindest zwei Führungselementen bestehenden vorderen Führungsgruppe maschinenseitig beabstandet eine aus zumindest zwei weiteren Führungselementen bestehende hintere Führungsgruppe über die drehversetzbare Spannhülse radial versetzbar, wodurch eine hochpräzise Doppelführung ausgebildet wird.

Vorteilhaft sind die Führungselemente zumindest gruppenweise einheitlich als Hohlzylindermantelsegmente ausgebildet, wodurch sich quer zur Versetzung der Führungselemente eine laterale Zwangsfläche ergibt.

Vorteilhaft sind einer Führungsgruppe genau drei umlaufend symmetrisch versetzte Führungselemente zugeordnet, wodurch eine direkte zweidimensionale Zentrierung des Einsteckendes möglich ist.

Vorteilhaft sind die zwei Verriegelungskörper über die drehversetzbare Spannhülse radial versetzbar, wodurch diese neben der Verriegelungsfunktion zudem eine Führungsfunktion übernehmen.

Die Erfindung wird bezüglich zweier vorteilhafter Ausführungsbeispiele näher erläutert mit:
Fig. 1 als Werkzeugaufnahme im Längsschnitt,
Fig. 2a, 2b als Querschnitte in den Ebenen IIa - IIa und Ilb - IIb der Fig. 1,
Fig. 3 als Querschnitt zu einem alternativen Ausführungsbeispiel entspr. der Ebene IIb - IIb der Fig. 1.

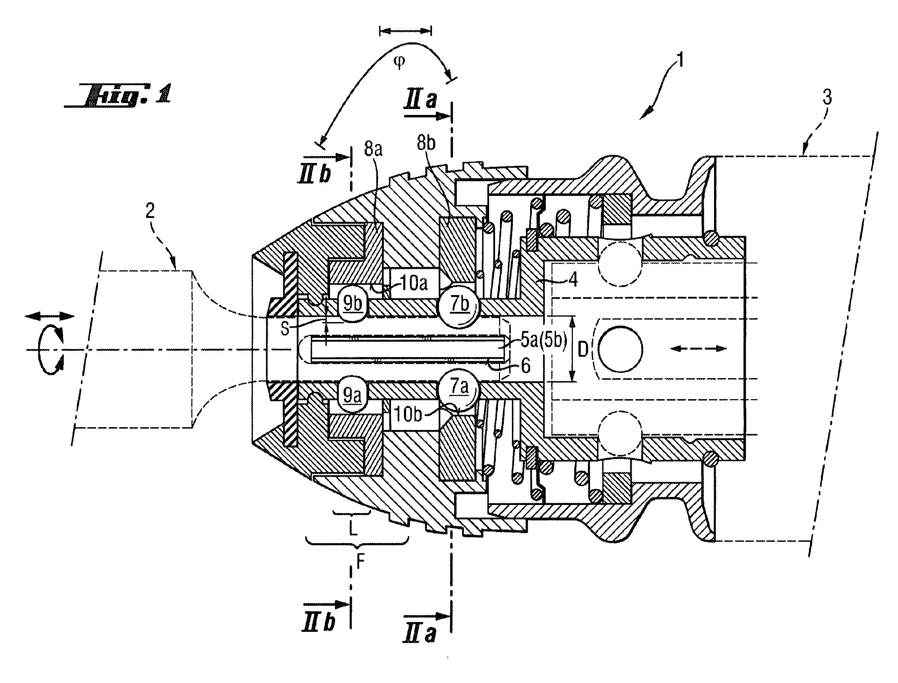

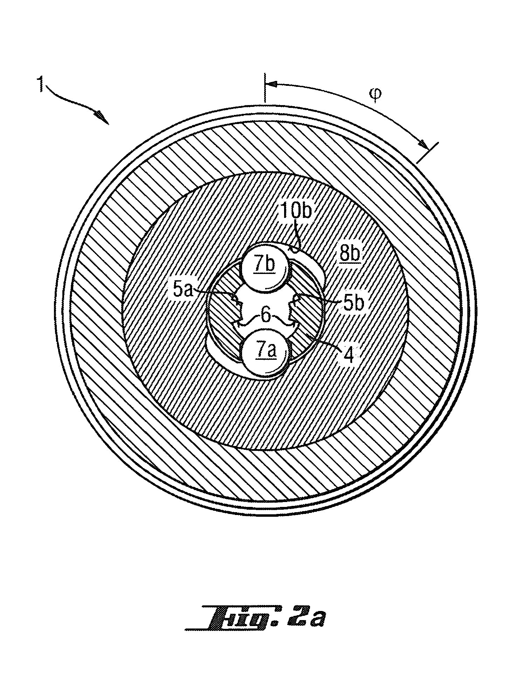

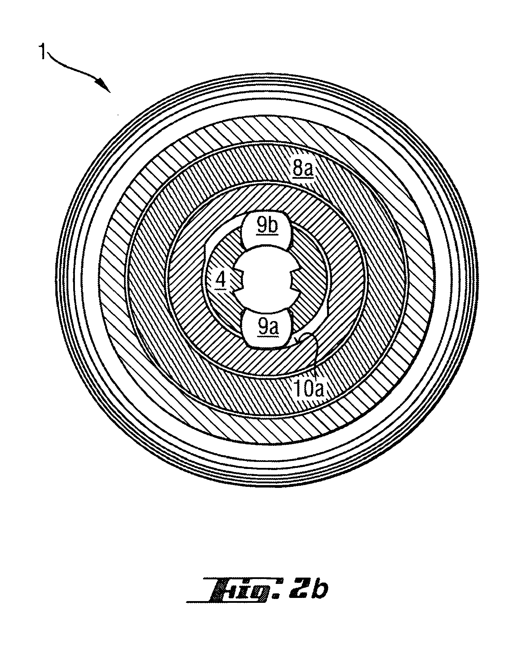

Nach den Fig. 1, 2a und 2b weist eine Werkzeugaufnahme 1 einer drehend und schlagend ein Werkzeug 2 antreibenden Werkzeugmaschine 3 genau zwei gegenüberliegende, von einer hohlzylinderförmigen Aufnahmehülse 4 eines Führungsdurchmessers D radial nach Innen einkragende, leistenförmige Drehmitnahmestege 5a, 5b mit radial verlaufenden Kontaktflächen 6 und zwei radial versetzbare Verriegelungskörper 7a, 7b in Form von Kugeln auf. In der Aufnahmehülse 4 sind in einem aufnahmeseitigen Führungsbereich F des Führungsdurchmessers D zwischen den Drehmitnahmestegen 5a, 5b genau zwei, über eine von Aussen handhabbar drehversetzbare erste Spannhülse 8a radial nach Innen versetzbare, Führungselemente 9a, 9b in Form von Hohlzylindermantelsegmenten angeordnet, deren axiale Führungslänge L die Hälfte des Führungsdurchmessers D beträgt. In der ersten Spannhülse 8a ist eine erste Kulissenführung 10a ausgeformt, an welcher bei deren Drehung ϕ die radial versetzbaren Führungselemente 9a, 9b formschlüssig entlang gleiten. Über die beidseitig begrenzt mögliche Drehung ϕ der ersten Spannhülse 8a von 45° erfolgt die radiale Versetzung der Führungselemente 9a, 9b nach Innen in den Führungsdurchmesser D hinein, wobei in der in Fig. 2b dargestellten, für Drehbohren geeigneten, Drehposition das Spaltmass S (überzeichnet in Fig. 1) von 0.05 mm überbrückt wird. In der anderen, nicht dargestellten, für das Schlagbohren geeigneten Drehposition der ersten Spannhülse 8a sind die Führungselemente 9a, 9b jeweils vollständig 0.2 mm radial ausserhalb des Führungsdurchmessers D angeordnet. Die zwei Verriegelungskörper 7a, 7b sind ebenfalls über eine drehversetzbare zweite Spannhülse 8b radial versetzbar, indem diese eine zugeordnete zweite Kulissenführung 10b ausgeformt, an welcher bei deren Drehung ϕ die radial versetzbaren Verriegelungskörper 7a, 7b formschlüssig entlang gleiten. Somit ist neben der aus zwei Führungselementen 9a, 9b bestehenden vorderen Führungsgruppe maschinenseitig beabstandet eine aus zwei Verriegelungskörpern 7a, 7b, die als Führungselemente wirken, bestehende hintere Führungsgruppe vorhanden,

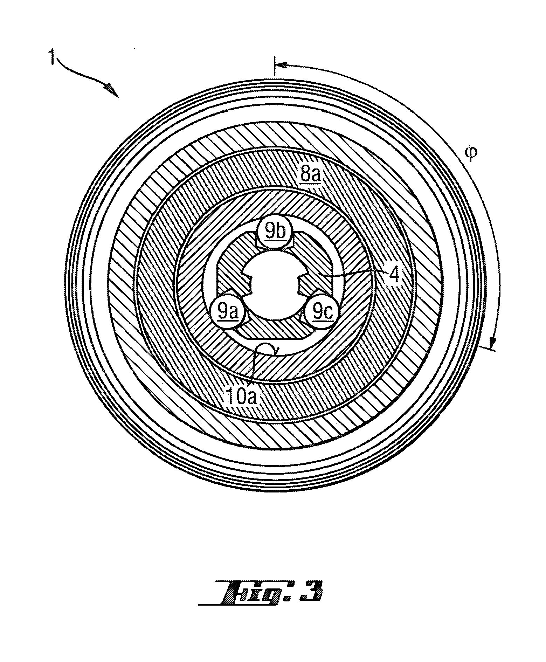

Nach der Fig. 3 sind bei einer alternativen Werkzeugaufnahme 1 im Querschnitt nach Ebene IIb - IIb der Fig. 1 in der hohlzylinderförmigen Aufnahmehülse 4 genau drei symmetrisch umlaufend tangential versetzte Führungselemente 9a, 9b, 9c in Form von Kugeln vorhanden, die über die um 110° drehversetzbare erste Spannhülse 8a mit einer ersten Kulissenführung 10a radial versetzbar sind.

## Patentansprüche

1. Werkzeugaufnahme mit mindestens zwei gegenüberliegenden, von einer hohlzylinderförmigen Aufnahmehülse (4) eines Führungsdurchmessers (D) radial nach Innen einkragenden, festen leistenförmigen Drehmitnahmestegen (5a, 5b) mit Kontaktflächen (6) sowie mit zumindest einem radial versetzbaren Verriegelungskörper (7a), **dadurch gekennzeichnet, dass** in der Aufnahmehülse (4) in einem aufnahmeseitigen Führungsbereich (F) des Führungsdurchmessers (D) beabstandet zu den Drehmitnahmestegen (5a, 5b) zumindest zwei, über eine handhabbar drehversetzbare Spannhülse (8a) radial ohne axialen Anteil nach Innen versetzbare, Führungselemente (9a, 9b) angeordnet sind.

2. Werkzeugaufnahme nach Anspruch 1, **dadurch gekennzeichnet, dass** die Führungselemente (9a, 9b) tangential versetzt zwischen den Drehmitnahmestegen (5a, 5b) angeordnet sind.

3. Werkzeugaufnahme nach Anspruch 1 oder 2, **dadurch gekennzeichnet, dass** die axiale Führungslänge (L) der Führungselemente (9a, 9b) zwischen einem halben und einem ganzen Führungsdurchmesser (D) beträgt.

4. Werkzeugaufnahme nach einem der Ansprüche 1 bis 3, **dadurch gekennzeichnet, dass** die Spannhülse (8a) eine maximale Drehung (ϕ) von maximal 120° ermöglicht.

5. Werkzeugaufnahme nach einem der Ansprüche 1 bis 4, **dadurch gekennzeichnet, dass** in einer Drehposition der Spannhülse (8a) die Führungselemente (9a, 9b) vollständig zumindest 0.1 mm radial ausserhalb des Führungsdurchmessers (D) sind.

6. Werkzeugaufnahme nach einem der Ansprüche 1 bis 5, **dadurch gekennzeichnet, dass** in der Spannhülse (8a) zumindest eine Kulissenführung (10a) ausgeformt ist, an welcher bei deren Drehung (ϕ) die radial versetzbaren Führungselemente (9a, 9b) formschlüssig entlang gleiten.

7. Werkzeugaufnahme nach einem der Ansprüche 1 bis 6, **dadurch gekennzeichnet, dass** neben der aus den zumindest zwei Führungselementen (9a, 9b) bestehenden vorderen Führungsgruppe maschinenseitig beabstandet eine aus zumindest zwei weiteren Führungselementen (7a, 7b) bestehende hintere Führungsgruppe über die drehversetzbare Spannhülse (8b) radial versetzbar ist.

8. Werkzeugaufnahme nach einem der Ansprüche 1 bis 7, **dadurch gekennzeichnet, dass** die Führungselemente (9a, 9b, 9c, 9d, 9e) zumindest gruppenweise einheitlich als Hohlzylindermantelsegmente ausgebildet sind.

9. Werkzeugaufnahme nach einem der Ansprüche 1 bis 8, **dadurch gekennzeichnet, dass** einer Führungsgruppe genau drei umlaufend symmetrisch versetzte Führungselemente (9a, 9b, 9c) zugeordnet sind.

10. Werkzeugaufnahme nach einem der Ansprüche 1 bis 9, **dadurch gekennzeichnet, dass** die zwei Verriegelungskörper (7a, 7b) über die drehversetzbare Spannhülse (8b) radial versetzbar sind.

## Claims

1. Tool holder comprising at least two fixed strip-shaped rotary driving webs (5a, 5b) situated opposite one another, projecting radially inwards from a hollow cylindrical receiving sleeve (4) having a guide diameter (D) and provided with contact surfaces (6), as well as at least one radially displaceable locking member (7a), **characterised in that** at least two guide elements (9a, 9b) displaceable radially inwards without an axial component by means of a manually rotatable clamping sleeve (8a) are arranged in the receiving sleeve (4) in a guide region (F) of the guide diameter (D) on the holder side disposed at a distance from the rotary driving webs (5a, 5b).

2. Tool holder according to claim 1, **characterised in that** the guide elements (9a, 9b) are arranged in such a manner that they are tangentially offset between the rotary driving webs (5a, 5b).

3. Tool holder according to claim 1 or claim 2, **characterised in that** the axial guide length (L) of the guide elements (9a, 9b) is between half the guide diameter (D) and the total guide diameter (D).

4. Tool holder according to one of claims 1 to 3, **characterised in that** the clamping sleeve (8a) allows for a maximum rotation (ϕ) of no more than 120°.

5. Tool holder according to one of claims 1 to 4, **characterised in that** the guide elements (9a, 9b) are entirely situated at least 0.1 mm radially outside the guide diameter (D) in a rotational position of the clamping sleeve (8a).

6. Tool holder according to one of claims 1 to 5, **characterised in that** the clamping sleeve (8a) is provided with at least one sliding block guide (10a) along which the radially displaceable guide elements (9a, 9b) slide in a positive manner during the rotation (ϕ) thereof.

7. Tool holder according to one of claims 1 to 6, **characterised in that**, in addition to the front guide group consisting of the at least two guide elements (9a, 9b), a rear guide group consisting of at least two further guide elements (7a, 7b) radially displaceable by means of the rotatable clamping sleeve (8b) is disposed at a distance on the machine side.

8. Tool holder according to one of claims 1 to 7, **characterised in that** the guide elements (9a, 9b, 9c, 9d, 9e) are designed at least uniformly in groups as hollow cylinder segments.

9. Tool holder according to one of claims 1 to 8, **characterised in that** exactly three circumferentially symmetrically offset guide elements (9a, 9b, 9c) are associated with one guide group.

10. Tool holder according to one of claims 1 to 9, **characterised in that** the two locking members (7a, 7b) are radially displaceable by means of the rotatable clamping sleeve (8b).

## Revendications

1. Porte-outil comportant au moins deux barrettes fixes d'entraînement en rotation (5a, 5b) en forme de barres, faisant radialement saillie vers l'intérieur à partir d'une douille de réception en forme de cylindre creux (4) ayant un diamètre de guidage (D) et présentant des surfaces de contact (6), ainsi qu'au moins un composant de verrouillage (7a) pouvant être déplacé radialement, **caractérisé en ce qu'**au moins deux éléments de guidage (9a, 9b) pouvant être radialement déplacés vers l'intérieur sans composante axiale, par l'intermédiaire d'une douille de serrage pouvant être tournée manuellement (8a), sont agencés dans la douille de réception (4) dans une zone de guidage côté porte-outil (F) ayant le diamètre de guidage (D) et espacés des barrettes d'entraînement en rotation (5a, 5b).

2. Porte-outil selon la revendication 1, **caractérisé en ce que** les éléments de guidage (9a, 9b) sont agencés de manière à pouvoir être tangentiellement déplacés entre les barrettes d'entraînement en rotation (5a, 5b).

3. Porte-outil selon la revendication 1 ou 2, **caractérisé en ce que** la longueur de guidage axiale (L) des éléments de guidage (9a, 9b) est comprise entre un demi-diamètre de guidage (D) et un diamètre de guidage (D) complet.

4. Porte-outil selon l'une quelconque des revendications 1 à 3, **caractérisé en ce que** la douille de serrage (8a) permet une rotation maximale (ϕ) de 120° maximum.

5. Porte-outil selon l'une quelconque des revendications 1 à 4, **caractérisé en ce que** dans une position de rotation de la douille de serrage (8a), les éléments de guidage (9a, 9b) sont situés entièrement radialement à l'extérieur du diamètre de guidage (D), à au moins 0,1 mm.

6. Porte-outil selon l'une quelconque des revendications 1 à 5, **caractérisé en ce qu'**au moins un guide coulissant (10a) est formé dans la douille de serrage (8a), guide le long duquel coulissent, par complémentarité de formes, les éléments de guidage pouvant être déplacés radialement (9a, 9b) lors de leur rotation (ϕ).

7. Porte-outil selon l'une quelconque des revendications 1 à 6, **caractérisé en ce qu'**en plus du groupe de guidage avant constitué des au moins deux éléments de guidage (9a, 9b) côté machine est agencé, de manière espacée, un groupe de guidage arrière constitué d'au moins deux éléments de guidage supplémentaires (7a, 7b) pouvant être radialement déplacés par l'intermédiaire de la douille de serrage rotative (8b).

8. Porte-outil selon l'une quelconque des revendications 1 à 7, **caractérisé en ce que** les éléments de guidage (9a, 9b, 9c, 9d, 9e) sont formés de manière au moins regroupée d'un seul tenant sous forme de segments d'enveloppe de cylindre creux.

9. Porte-outil selon l'une quelconque des revendications 1 à 8, **caractérisé en ce qu'**un groupe de guidage est constitué d'exactement trois éléments de guidage (9a, 9b, 9c) espacés symétriquement de manière circonférentielle.

10. Porte-outil selon l'une quelconque des revendications 1 à 9, **caractérisé en ce que** les deux composants de verrouillage (7a, 7b) peuvent être déplacés radialement par l'intermédiaire de la douille de serrage rotative (8b).
